# EUROPEAN PATENT SPECIFICATION

(11) **EP 3 321 906 B1**
(45) Date of publication and mention of the grant of the patent: **02.10.2019**
(21) Application number: 17201027.4
(22) Date of filing: 10.11.2017
(51) Int. Cl.: G08B 17/06, G08B 17/107

(54) **HIGH SENSITIVITY FIBER OPTIC BASED DETECTION**
AUF HOCHEMPFINDLICHER FASEROPTIK BASIERENDE DETEKTION
DÉTECTION À BASE DE FIBRES OPTIQUES À HAUTE SENSIBILITÉ

(30) Priority: 11.11.2016 US 201662420828 P
(43) Date of publication of application: 16.05.2018
(73) Proprietor: Kidde Technologies, Inc., Wilson, NC 27896 (US)
(72) Inventor: BIRNKRANT, Michael J., Wethersfield, CT 06109 (US); CORETH, Stefan, Roanoke Rapids, NC 27870 (US); BELL, Kenneth, Epsom, Surrey KT18 78Z (GB); HARRIS, Peter R., West Hartford, CT 06119 (US); VINCITORE, Antonio M., Lakeville, MN 55044 (US); ALEXANDER, Jennifer M., Roseville, MN 55113 (US)
(74) Representative: Dehns

(56) References cited:
- EP-A1- 1 887 536
- EP-A2- 1 408 469
- DE-A1-102013 213 721
- SU-A1- 1 179 402

## Description

### BACKGROUND

Embodiments of this disclosure relate generally to a system for detecting conditions within a predefined space and, more particularly, to a fiber optic detection system.

Conventional photoelectric smoke detection systems operate by detecting the presence of smoke or other airborne pollutants utilizing light. Upon detection of a threshold level of particles, an alarm or other signal, such as a notification signal, may be activated and operation of a fire suppression system may be initiated. Throughout the specification, the term alarm will be used to indicate these possible outcomes of a detection.

Smoke detection systems are susceptible to alarms generated from a source that is not a hazard. As an example, the presence of non-hazardous particulates near or inside the smoke detection system creates a false alarm condition. The particles may include non-combustible or combustible materials, which create a condition within the detector that mimics smoke. The ability for a smoke detection system to discriminate smoke from non-hazardous sources reduces false alarms.

Smoke detection systems utilize anisotropic light scattering to reduce false alarms. The anisotropic light scattering results in the number of photons being redirected from their original direction non-uniformly with respect to angle. In practice, this can be accomplished utilizing a combination of opto-electronic detectors and light sources arranged and oriented such that more than one angle is utilized for determination of an alarm condition.

Current aircraft regulation, FAR 25.858, requires not only the detection of a fire in the cargo compartment of the aircraft, but also providing a visual indication to the crew of the aircraft within one minute. However, fires that are much smaller in size, in critical locations or in areas not currently protected, possess a risk. Early reliable detection would allow for better control of the fire. Higher sensitivity of the fire detection system enables earlier detection, but increases the risk of false alarms. Advances in signal processing and sensor design for point sensors and aspirating systems have decreased nuisance alarms by incorporating temperature and smoke detection. However, the size and complexity of these systems restricts sensing to larger parts of the plane.

DE 10 2013 213721 discloses a fire alarm system and use of an optic smoke detection module.

EP 1 887 536 discloses a smoke alarm using light scattering.

EP 1 408 469 discloses a fire detector.

SU 1179402 discloses a scattering type smoke detection system. Light is transmitted from 4 to 7 through a single core fiber optic cable 1. The fiber optic cable defines a plurality of nodes 3, each node comprising a reflector (indicated as 3). In case there is no smoke, the light is reflected by the reflectors 3 and travels from node to node till it reaches a light absorber 7. If smoke is present at one of the nodes, light is scattered at various angles and travels in the backwards direction towards a control system 5 where the light is analysed to detect smoke.

### SUMMARY

According to one aspect, the present disclosure provides a detection system as claimed in claim 1.

In addition to one or more of the features described above, or as an alternative, in further embodiments comprising a light sensitive device, wherein the light sensitive device is operably coupled to a control unit and the cores.

In addition to one or more of the features described above, or as an alternative, in further embodiments the light sensitive device converts the scattered light associated with the node into a signal receivable by the control unit.

In addition to one or more of the features described above, or as an alternative, in further embodiments the light sensitive device is a photodiode.

In addition to one or more of the features described above, or as an alternative, in further embodiments comprising a light source for transmitting light to the node.

In addition to one or more of the features described above, or as an alternative, in further embodiments the light source is a laser diode.

In addition to one or more of the features described above, or as an alternative, in further embodiments the light source is operably coupled to the control unit and the cores.

In addition to one or more of the features described above, or as an alternative, in further embodiments further comprising a light mold positioned adjacent to the node, the cores being operably coupled to the light mold to optically maintain an orientation of the transmitted light relative to the scattered light.

In addition to one or more of the features described above, or as an alternative, in further embodiments comprising the light mold positioned adjacent to the node to selectively receive scattered light from one or more scattering angles indicative of the presence of one or more conditions.

In addition to one or more of the features described above, or as an alternative, in further embodiments each of the cores further comprises a plurality of cores associated with a node for transmitting and receiving light.

In addition to one or more of the features described above, or as an alternative, in further embodiments the predetermined area is a portion of an aircraft.

In addition to one or more of the features described above, or as an alternative, in further embodiments the condition is the presence of smoke in the predetermined area.

In addition to one or more of the features described above, or as an alternative, in further embodiments each of the nodes further comprises a first fiber optic core and a second fiber optic core. The first fiber optic core receives the scattered light at a first scattering angle relative to the light transmitted through the node and the second fiber optic core receives the scattered light at a second scattering angle relative to the light transmitted through the node, the first scattering angle being different than the second scattering angle.

According to another aspect, the present disclosure provides a method of measuring one or more conditions as claimed in claim 11.

In addition to one or more of the features described above, or as an alternative, in further embodiments the scattered light is received via the cores arranged at the at least one scattering angle.

In addition to one or more of the features described above, or as an alternative, in further embodiments determining at least one of the presence and magnitude of the one or more conditions includes evaluating the signal using cross correlation of the signals associated with a plurality of scattering angles.

In addition to one or more of the features described above, or as an alternative, in further embodiments determining at least one of the presence and magnitude of the one or more conditions includes evaluating the signal using a ratio of the signals associated with a plurality of scattering angles.

In addition to one or more of the features described above, or as an alternative, in further embodiments at least one light sensitive device operably coupled to the control unit is configured to convert the scattered light associated with the at least one node into an electrical signal before communicating the signal to the control unit.

In addition to one or more of the features described above, or as an alternative, in further embodiment the one or more conditions includes the presence of smoke in the predetermined area.

### BRIEF DESCRIPTION OF THE DRAWINGS

The subject matter, which is regarded as the present disclosure, is particularly pointed out and distinctly claimed in the claims at the conclusion of the specification. The foregoing and other features, and advantages of the present disclosure are apparent from the following detailed description taken in conjunction with the accompanying drawings in which:
FIG. 1A is schematic diagram of a detection system according to an arrangement beyond the scope of the claims;
FIG. 1B is a schematic diagram of light transmission at a node of a detection system according to an arrangement beyond the scope of the claims;
FIG. 2A is a schematic diagram of a detection system according to another arrangement beyond the scope of the claims;
FIG. 2B is a schematic diagram of a detection system according to another arrangement beyond the scope of the claims;
FIG. 3 is a cross-sectional view of a fiber optic node of the fiber harness of FIG. 1 according to an arrangement beyond the scope of the claims;
FIG. 4A is a side view of a fiber harness of a detection system according to an embodiment;
FIG. 4B is a schematic diagram of a fiber harness of a detection system according to an embodiment;
FIG. 5 is a schematic diagram of a detection system including a plurality of fiber harnesses according to an embodiment;
FIG. 6 is a perspective view of an area within a building to be monitored by a detection system according to an embodiment;
FIG. 7 is a schematic diagram of a control system of the detection system according to an embodiment;
FIG. 8 is another schematic diagram of a detection system including an avalanche photo diode sensor according to an embodiment;
FIG. 9 is a method of operating a detection system according to an embodiment;
FIG. 10 is a schematic diagram of process flow for evaluating the signals generated by the light sensitive device according to an embodiment;
FIGS. 11A and 11B are diagrams illustrating the signals recorded by the detection system over time for various predefined conditions or events according to an embodiment;
FIG. 12 is a cross-sectional schematic diagram of a fiber optic branch according to an embodiment; and
FIG. 13 is a schematic diagram of a light mold according to an embodiment.

The detailed description explains embodiments of the present disclosure, together with advantages and features, by way of example with reference to the drawings.

### DETAILED DESCRIPTION

Referring now to the FIGS., a system 20 for detecting one or more conditions or events within a designated area is illustrated. The detection system 20 may be able to detect one or more hazardous conditions, including but not limited to the presence of smoke, fire, temperature, flame, or any of a plurality of pollutants, combustion products, or chemicals. Alternatively, or in addition, the detection system 20 may be configured to perform monitoring operations of people, lighting conditions, or objects. In an embodiment, the system 20 may operate in a manner similar to a motion sensor, such as to detect the presence of a person, occupants, or unauthorized access to the designated area for example. Utilizing fiber optics for detection of light scattering from multiple angles enables detection and discrimination. The conditions and events described herein are intended as an example only, and other suitable conditions or events are within the scope of the disclosure.

The detection system 20 uses light to evaluate a volume for the presence of a condition. In this specification, the term "light" means coherent or incoherent radiation at any frequency or a combination of frequencies in the electromagnetic spectrum. In an example, the photoelectric system uses light scattering to determine the presence of particles in the ambient atmosphere to indicate the existence of a predetermined condition or event. In this specification, the term "scattered light" may include any change to the amplitude/intensity or direction of the incident light, including reflection, refraction, diffraction, absorption, and scattering in any/all directions. In this example, light is emitted into the designated area; when the light encounters an object (a person, smoke particle, or gas molecule for example), the light can be scattered and/or absorbed due to a difference in the refractive index of the object compared to the surrounding medium (air). Depending on the object, the light can be scattered in all different directions. Observing any changes in the incident light, by detecting light scattered by an object for example, can provide information about the designated area including determining the presence of a predetermined condition or event.

Light scattering is a physical property attributed to the interaction of light with the atoms or surface that make up the material. The angle of redirection for light emitted from a source is dependent on the material composition and geometry. The redirection of light can be isotropic, where every angle receives the same quantity of radiation. In addition, the redirection of light can be anisotropic or the redirection of a quantity of light non-uniformly with respect to angle. The amount of anisotropy is dependent on the optical, electronic, and magnetic properties combined with geometric properties of the material. The anisotropy is also frequency dependent. In practice this principle can be utilized for discriminating; one material from another material; a group of materials from another group of materials; or combinations of materials and groups of materials.

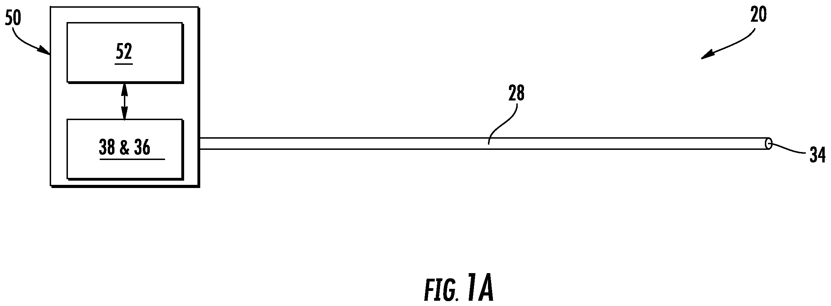

As shown in FIG. 1A, an arrangement beyond the scope of the claims includes a single fiber optic cable 28 with at least one fiber optic core. The term fiber optic cable 28 includes any form of optical fiber. As examples, an optical fiber is a length of cable that is composed of one or more optical fiber cores of single-mode, multimode, polarization maintaining, photonic crystal fiber or hollow core. A node 34 is located at the termination point of a fiber optic cable 32 and is inherently included in the definition of a fiber optic cable 28. The node 34 is positioned in communication with the ambient atmosphere. A light source 36, such as a laser diode for example, and a light sensitive device 38, such as a photodiode for example, are coupled to the fiber optic cable 28. A control system 50 of the detection system 20, discussed in further detail below, is utilized to manage the detection system operation and may include control of components, data acquisition, data processing and data analysis.

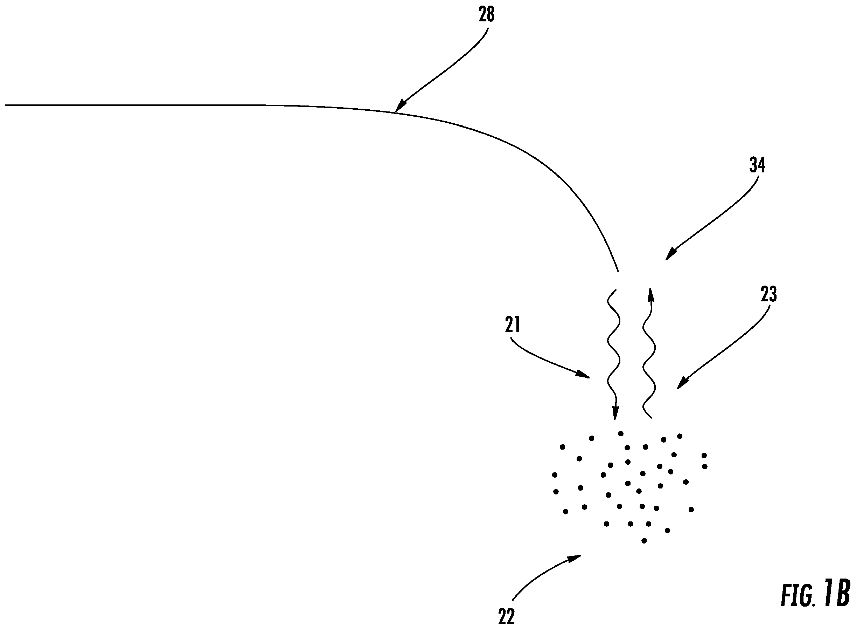

As shown in FIG. 1B, the light from the light source is transmitted through the node 34 to the surrounding area, illustrated schematically at 21. The light 21 interacts with one or more particles indicative of a condition, illustrated schematically at 22, and is reflected or transmitted back to the node 34, illustrated schematically at 23. A comparison of the light provided to the node 34 and/or changes to the light reflected back to the light sensitive device 38 from the node 34 will indicate whether or not changes in the atmosphere are present in the ambient atmosphere adjacent the node 34 that are causing the scattering of the light. The scattered light as described herein is intended to additionally include reflected, transmitted, and absorbed light. Although the detection system 20 is described as using light scattering to determine a condition or event, embodiments where light obscuration, absorption, and fluorescence is used in addition to or in place of light scattering are also within the scope of the disclosure.

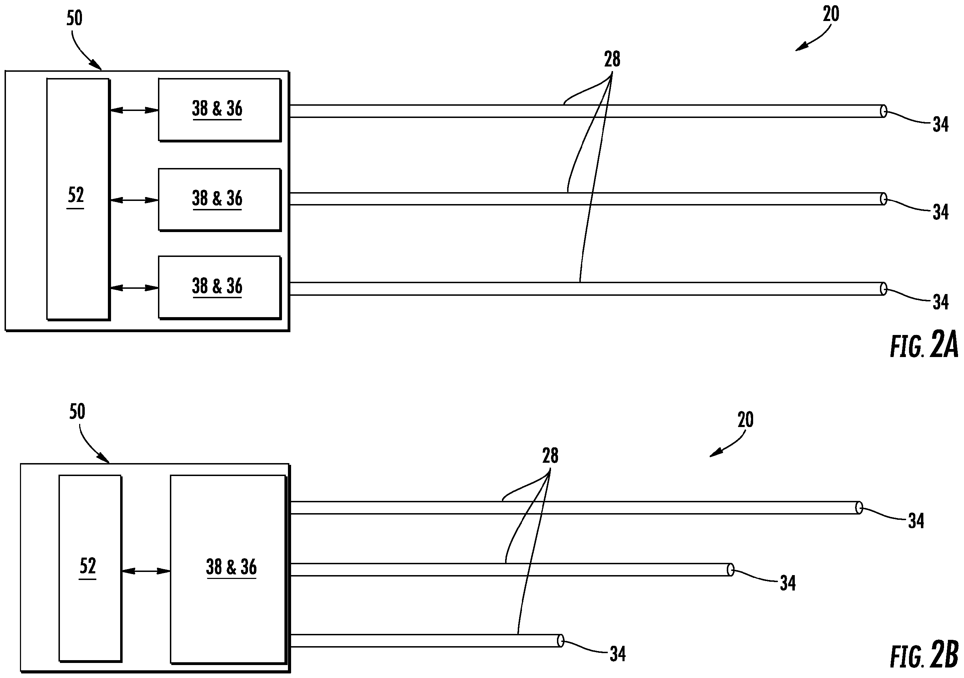

In another example, the detection system 20 can include a plurality of nodes 34. As illustrated in FIG. 2A, showing an arrangement beyond the scope of the claims, a plurality of fiber optic cables 28 and corresponding nodes 34 are each associated with a distinct light sensitive device 38. Where an individual light sensitive device 38 is associated with each node 34, as shown in FIG. 2A, the signal output from each node 34 can be monitored. Upon detection of a predetermined event or condition, it will be possible to localize the position of the event because the position of each node 34 within the system 20 is known. Alternately, as shown in FIG 2B, a plurality of fiber optic cables 28, may be coupled to a single light sensitive device.

Where a single light sensitive device 38 is configured to receive scattered light from a plurality of nodes 34, the control system 50 is able to localize the scattered light, i.e. identify the scattered light received from each of the plurality of nodes 34. The control system 50 may use the position of each node 34, specifically the length of the fiber optic cables 28 associated with each node 34 and the corresponding time of flight (i.e. the time elapsed between when the light was emitted by the light source 36 and when the light was received by the light sensitive device 38), to associate different parts of the light signal with each of the respective nodes 34 that are connected to that light sensitive device 38. Alternatively, or in addition, the time of flight may include the time elapsed between when the light is emitted from the node and when the scattered light is received back at the node. In such arrangements, the time of flight provides information regarding the distance of the object relative to the node.

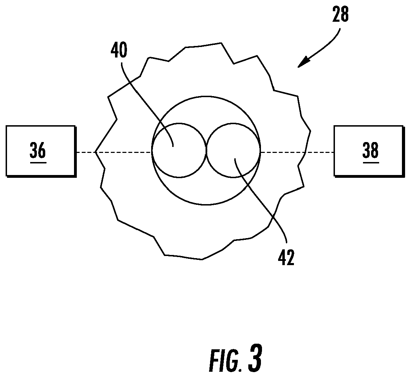

In an arrangement beyond the scope of the claims, illustrated in the cross-section of the fiber optic cable shown in FIG. 3, two substantially identical and parallel light transmission fiber cores 40, 42 are included in the fiber optic cable 28 and terminate at the node 34. However, it should be understood that examples where the fiber optic cable 28 includes only a single fiber core, or more than two cores are also contemplated herein. The light source 36 may be coupled to the first fiber core 40 and the light sensitive device 38 may be coupled to the second fiber core 42, for example near a first end of the fiber optic cable 28. The light source 36 is selectively operable to emit light, which travels down the first fiber core 40 of the fiber optic cable 28 to the node 34. At the node 34, the emitted light is expelled into the adjacent atmosphere. The light is scattered and transmitted back into the node 34 and down the fiber cable 28 to the light sensitive device 38 via the second fiber core 42.

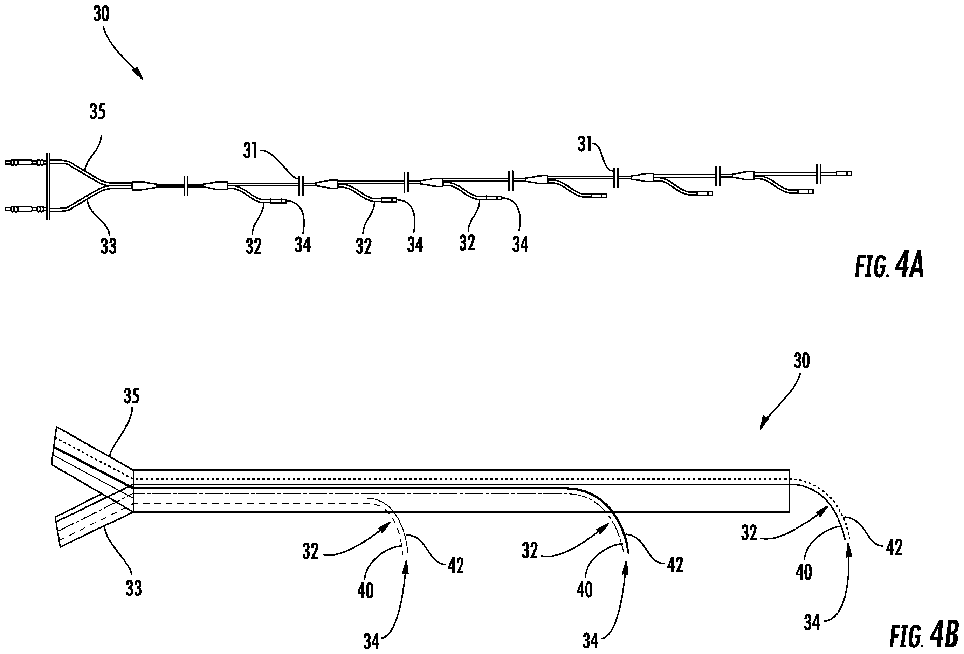

With reference now to FIG. 4A, according to the invention, the detection system 20 includes a fiber harness 30 having a plurality of fiber optic cables 28 bundled together. In an embodiment, a plurality of fiber cores 40, 42 are bundled together at a location to form a fiber harness backbone 31 with the ends of the fiber optic cables 28 being separated (not included in the bundled backbone) to define a plurality of fiber optic branches 32 of the fiber harness 30. As shown, the plurality of fiber cores 40, 42 branch off to form a plurality of individual fiber branches 32, each of which terminates at a node 34. In the non-limiting embodiments of FIGS. 4A and 4B, the fiber harness 30 additionally includes an emitter leg 33 and a receiver leg 35 associated with the fiber branches 32. The emitter leg 33 may contain the first fiber cores 40 from each of the plurality of fiber branches 32 and the receiver leg 35 may contain all of the second fiber cores 42 from each of the fiber branches 32. The length of the fiber optic cores 40, 42 extending between the emitter leg 33 or the receiver leg 35 and the node 34 may vary in length such that the branches 32 and corresponding nodes 34 are arranged at various positions along the length of the fiber harness backbone 31. In an embodiment, the positions of the nodes 34 may be set during manufacture, or at the time of installation of the system 20.

Alternatively, the fiber harness 30 may include a fiber optic cable (not shown) having a plurality of branches 32 integrally formed therewith and extending therefrom. The branches 32 may include only a single fiber optic core. The configuration, specifically the spacing of the nodes 34 within a fiber harness 30 may be substantially equidistant, or may vary over the length of the harness 30. In an embodiment, the positioning of each node 34 may correlate to a specific location within the designated area.

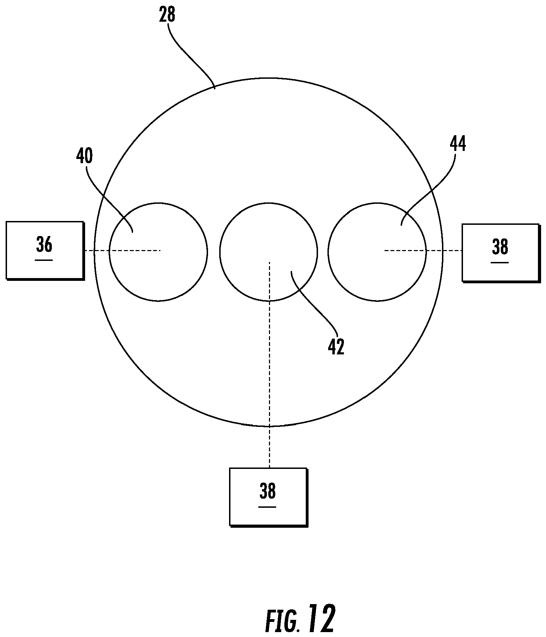

In an embodiment, the system 20 includes a light mold, guide, or other distribution device 39, as shown in FIG. 12. The light mold 39 is positioned such that the node is arranged in communication with the light mold which is coupled to the ambient atmosphere. As a result of the positioning of the nodes 34, light is emitted from the node 34 via the light mold 39. The light mold 39 directs the light to a first position and illuminates the atmosphere at a given angle α and receives light from the atmosphere at a given angular position. The resultant light scattering that occurs is not uniform about the periphery of the emitted light. Rather, the scattering that occurs is also angularly dependent which causes the light to scatter more intensely in some directions relative to the emitted light versus other directions.

To effectively detect one or more conditions at or near a node 34, the system 20 needs to be able to discriminate between the back scatter from the light emitted at a known angular position and the light scatter from another angular position. To do so, the light mold 39 is utilized to collect light from multiple angles. In an embodiment, the light mold 39 is a node 34 where the signal of reflected light from a node 34 is collected and is evaluated based on a time of flight delay. The time of flight provides additional information regarding the distance between the back scatter position and a secondary angular position.

The light mold 39 is a component of the detection system that enables collection of light from multiple angles. The light mold 39 can be fabricated from any suitable material, including but not limited to, fiber optics, free space optics, molded plastic optics or photonic integrated circuits for example. In addition, the light mold 39 and node 34 may be integrated; a plurality of fiber optic cores 40 can be bundled together in a fiber branch 32, such that a node 34 contains a plurality of fiber optic cores placed at different angles with respect to the emitted light.

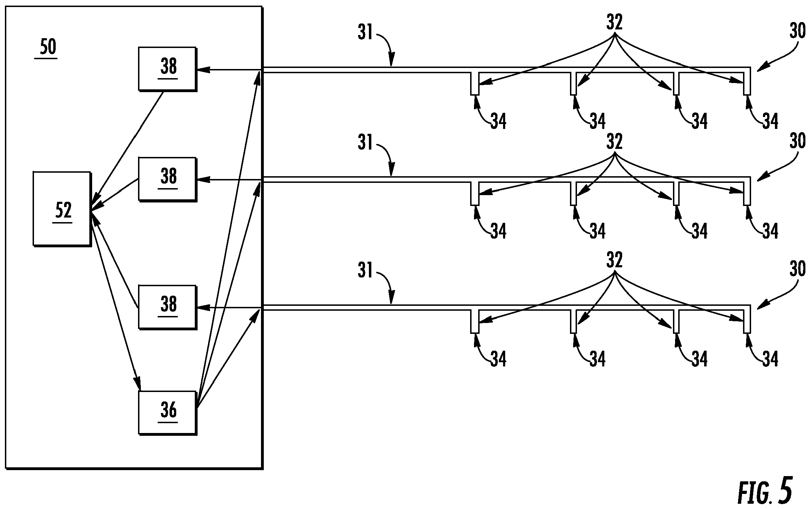

With reference now to FIG. 5, the detection system 20 may additionally include a plurality of fiber harnesses 30. In the illustrated, non-limiting embodiment, a distinct light sensitive device 38 is associated with each of the plurality of fiber harnesses 30. However, embodiments where a single light sensitive device 38 is coupled to the plurality of fiber harnesses 30 are also contemplated here. In addition, a single light source 36 may be operably coupled to the plurality of light transmission fiber cores 40 within the plurality of fiber harnesses 30 of the system 20. Alternatively, the detection system 20 may include a plurality of light sources 36, each of which is coupled to one or more of the plurality of fiber harnesses 30.

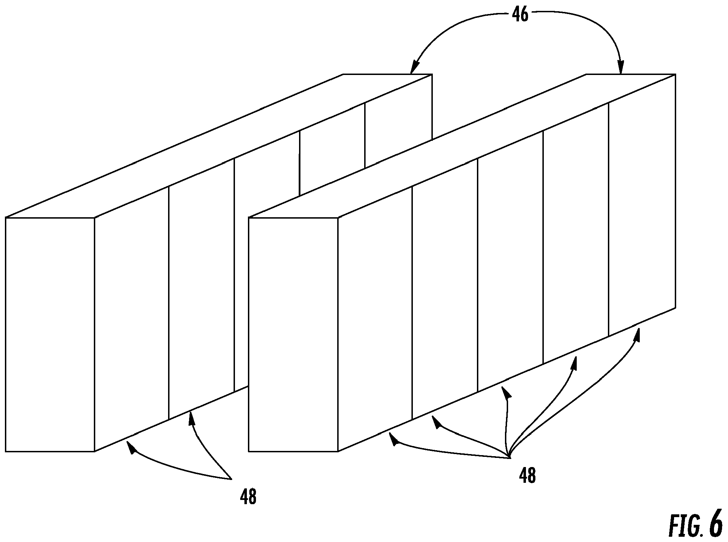

The detection system 20 may be configured to monitor a predetermined area such as a building. The detection system 20 may be especially utilized for predetermined areas having a crowded environment, such as a server room, as shown in FIG. 6 for example. Each fiber harness 30 may be aligned with one or more rows of equipment 46, and each node 34 therein may be located directly adjacent to one of the towers 48 within the rows 46. In addition, nodes may be arranged so as to monitor specific enclosures, electronic devices, or machinery. Positioning of the nodes 34 in such a manner allows for earlier detection of a condition as well as localization, which may limit the exposure of the other equipment in the room to the same condition. In another application, the detection system 20 may be integrated into an aircraft, such as for monitoring a cargo bay, avionics rack, lavatory, or another confined region of the aircraft that may be susceptible to fires or other events.

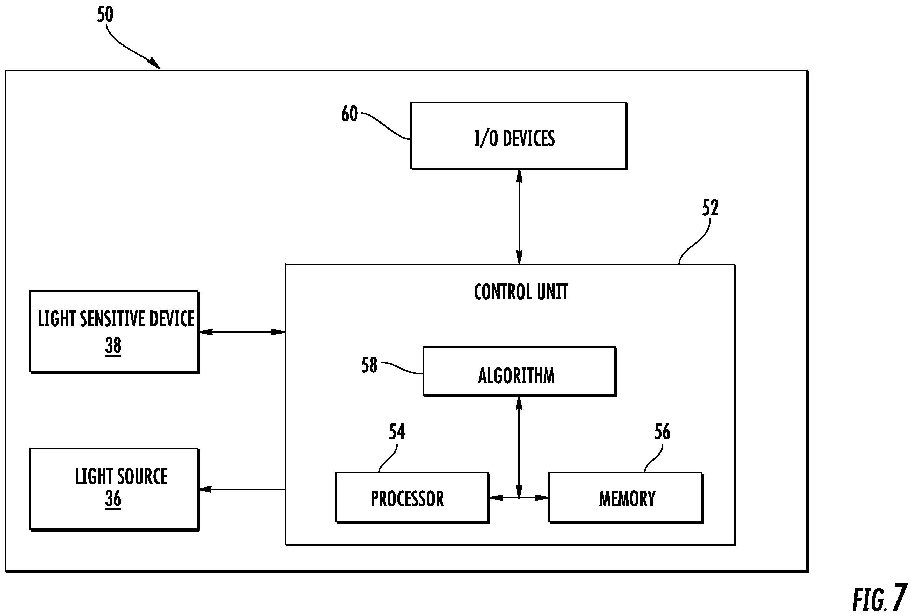

The control system 50 of the detection system 20 is utilized to manage the detection system operation and may include control of components, data acquisition, data processing and data analysis. The control system 50, illustrated in FIG. 7, includes at least one light sensitive device 38, at least one light source, 36, and a control unit 52, such as a computer having one or more processors 54 and memory 56 for implementing an algorithm 58 as executable instructions that are executed by the processor 54. The instructions may be stored or organized in any manner at any level of abstraction. The processor 54 may be any type of processor, including a central processing unit ("CPU"), a general purpose processor, a digital signal processor, a microcontroller, an application specific integrated circuit ("ASIC"), a field programmable gate array ("FPGA"), or the like. Also, in some embodiments, memory 56 may include random access memory ("RAM"), read only memory ("ROM"), or other electronic, optical, magnetic, or any other computer readable medium for storing and supporting processing in the memory 56 . In addition to being operably coupled to the at least one light source 36 and the at least one light sensitive device 38, the control unit 52 may be associated with one or more input/output devices 60. In an embodiment, the input/output devices 60 may include an alarm or other signal, or a fire suppression system which are activated upon detection of a predefined event or condition. It should be understood herein that the term alarm, as used herein, may indicate any of the possible outcomes of a detection.

The processor 54 may be coupled to the at least one light source 36 and the at least one light sensitive device 38 via connectors. The light sensitive device 38 is configured to convert the scattered light received from a node 34 into a corresponding signal receivable by the processor 54. In an embodiment, the signal generated by the light sensing device 38 is an electronic signal. The signal output from the light sensing device 38 is then provided to the control unit 52 for processing using an algorithm to determine whether a predefined condition is present.

The signal received by or outputted from the light sensitive device(s) 38 may be amplified and/or filtered, such as by a comparator (not shown), to reduce or eliminate irrelevant information within the signal prior to being communicated to the control unit 52 located remotely from the node 34. In such embodiments, the amplification and filtering of the signal may occur directly within the light sensing device 38, or alternatively, may occur via one or more components disposed between the light sensing device 38 and the control unit 52. The control unit 52 may control the data acquisition of the light sensitive device 38, such as by adjusting the gain of the amplifier, the bandwidth of filters, sampling rates, the amount of timing and data buffering for example.

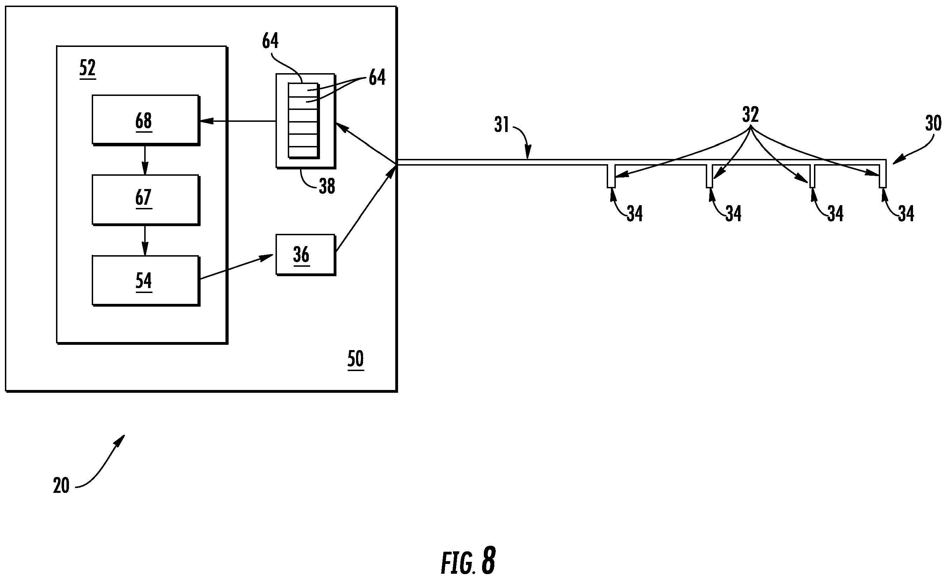

With reference now to FIG. 8, in an embodiment of the system 20, the light sensitive device 38 may include one or more Avalanche Photodiode (APD) sensors 64. For example, an array 66 of APD sensors 64 may be associated with the one or more fiber harnesses 30. In an embodiment, the number of APD sensors 64 within the sensor array 66 is equal to or greater than the total number of fiber harnesses 30 operably coupled thereto. However, embodiments where the total number of APD sensors 64 within the sensor array 66 is less than the total number of fiber harnesses 30 are also contemplated herein.

Data representative of the output from each APD sensor 64 in the APD array 66 is periodically taken by a switch 68, or alternatively, is collected simultaneously. The data acquisition 67 collects the electronic signals from the APD and associates the collected signals with metadata. The metadata as an example can be time, frequency, location or node. In an example, the electronic signals are from the APD are synchronized to the laser modulation such that the electrical signals are collected for a period of time that starts when the laser is pulsed to several microseconds after the laser pulse. The data will be collected and processed by the processor 54 to determine whether any of the nodes 34 indicates the existence of a predefined condition or event. In an embodiment, only a portion of the data outputted by the sensor array 66, for example the data from a first APD sensor 64 associated with a first fiber harness 30, is collected. The switch 68 is therefore configured to collect information from the various APD sensors 64 of the sensor array 66 sequentially. While the data collected from a first APD sensor 64 is being processed to determine if an event or condition has occurred, the data from a second APD 66 of the sensor array 66 is collected and provided to the processor 54 for analysis. When a predefined condition or event has been detected from the data collected from one of the APD sensors 64, the switch 68 may be configured to provide additional information from the same APD sensor 64 to the processor 54 to track the condition or event.

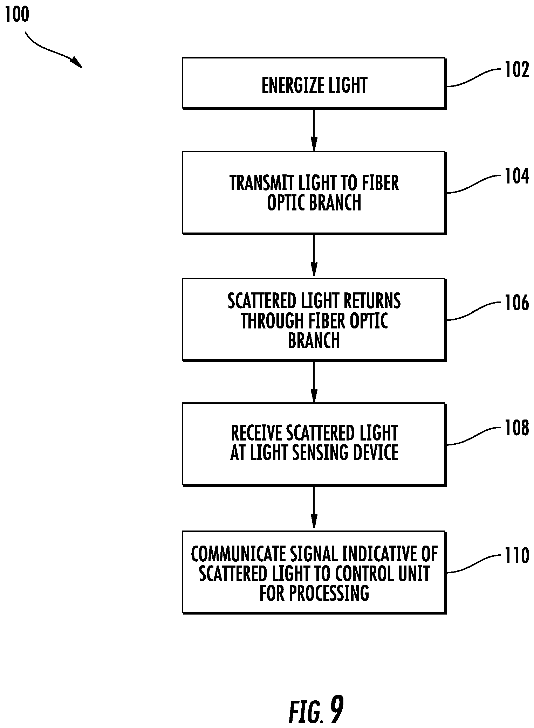

A method of operation 100 of the detection system 20 is illustrated in FIG. 9. The control unit 52 operably coupled to the light source 36 is configured to selectively energize the light source 36, as shown in block 102, and to emit light to a fiber harness 30 coupled thereto as shown in block 104. Based on the desired operation of the detection system 20, the control unit 52 may vary the intensity, duration, repetition, frequency, or other properties, of the light emitted. As the light travels down the first fiber core 40 of the at least one fiber optic branch 32, all or a portion of the light is emitted at one or more nodes 34 of the fiber harness 30. In block 106, light is scattered in the predetermined area and transmitted back through the fiber optic branches 32 via the second fiber cores 42. The scattered light may include one or more of scattered light within the atmosphere adjacent the node and scattered light that reflects from an interior of the fiber optic branch 32. The scattered light is transmitted to the at least one light sensing device 38 in block 108. As shown in block 110, the light sensing device 38 generates a signal in response to the scattered light received by each node 34, and provides that signal to the control unit 52 for further processing.

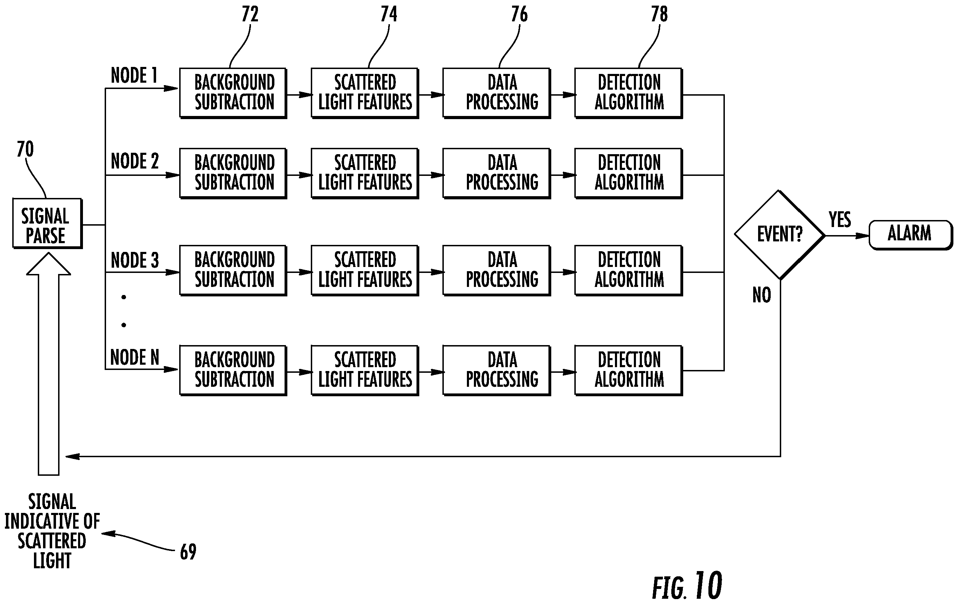

Using the algorithm 58 executed by the processor 54, each of the signals representing the scattered light received by the corresponding nodes 34 are evaluated to determine whether the light at the node 34 is indicative of a predefined condition, such as smoke for example. With reference to FIG. 10, a schematic diagram illustrating an example of a flow path for processing the signals generated by each of the nodes 34 is illustrated. As shown, the signal indicative of scattered light 69 is parsed, shown at block 70, into a plurality of signals based on their respective originating node 34. In the illustrated, non-limiting embodiment, background signals, illustrated schematically at 72, are subtracted from the data before the pulse features are evaluated for each of the individual signals. Through integration, pulse compression, and/or feature extraction, shown at block 74, one or more characteristics or features (pulse features) of the signal may be determined. Examples of such features include, but are not limited to, a peak height, an area under a curve defined by the signal, statistical characteristics such as mean, variance, and/or higher-order moments, correlations in time, frequency, space, and/or combinations thereof, and empirical features as determined by deep learning, dictionary learning, and/or adaptive learning and the like.

In an embodiment, the time of flight record is parsed and features are extracted. The time of flight record can cover a period of time. For example, a time of flight record can record light intensity over 0.001 -1,000,000 nanoseconds, 0.1-100,000 nanoseconds, or 0.1-10,000 microseconds. The features extracted from the signal can include, but are not limited to height, full width at half maximum, signal pick up time, signal drop off time, group velocity, integration, rate of change, mean, and variance for example.

Through application of the data processing, illustrated schematically at block 76, the features may then be further processed by using, for example, smoothing, Fourier transforms or cross correlation. In an embodiment, the processed data is then sent to the detection algorithm at block 78 to determine whether or not the signal indicates the presence and/or magnitude of a condition or event at a corresponding node 34. This evaluation may be a simple binary comparison that does not identify the magnitude of deviation between the characteristic and a threshold. The evaluation may also be a comparison of a numerical function of the characteristic or characteristics to a threshold. The threshold may be determined a priori or may be determined from the signal. The determination of the threshold from the signal may be called background learning. Background learning may be accomplished by adaptive filtering, model-based parameter estimation, statistical modeling, and the like. In some embodiments, if one of the identified features does not exceed a threshold, the remainder of the detection algorithm is not applied in order to reduce the total amount processing done during the detection algorithm. In the event that the detection algorithm indicated the presence of the condition at one or more nodes 34, an alarm or other fire suppression system may, but need not be activated. It should be understood that the process for evaluating the data illustrated and described herein is intended as an example only and that other processes including some or all of the steps indicated in the FIG. are also contemplated herein.

The evaluation may also advantageously employ classifiers including those that may be learned from the signal via deep learning techniques including, but not limited to deep neural networks, convolutional neural networks, recursive neural networks, dictionary learning, bag of visual/depth word techniques, Support Vector Machine (SVM), Decision Trees, Decision Forests, Fuzzy Logic, and the like. The classifiers may also be constructed using Markov Model techniques, Hidden Markov Models (HMM), Markov Decision Processes (MDP), Partially Observable MDPs, Markov Decision Logic, Probabilistic Programming, and the like.

In addition to evaluating the signals generated from each node 34 individually, the processor 54 may additionally be configured to evaluate the plurality of signals or characteristics thereof collectively, such as through a data fusion operation to produce fused signals or fused characteristics. The data fusion operation may provide information related to time and spatial evolution of an event or predetermined condition. As a result, a data fusion operation may be useful in detecting a lower level event, insufficient to initiate an alarm at any of the nodes 34 individually. For example, in the event of a slow burning fire, the light signal generated by a small amount of smoke near each of the nodes 34 individually may not be sufficient to initiate an alarm. However, when the signals from the plurality of nodes 34 are reviewed in aggregate, the increase in light returned to the light sensitive device 38 from multiple nodes 34 may indicate the occurrence of an event or the presence of an object not otherwise detected. In an embodiment, the fusion is performed by Bayesian Estimation. Alternatively, linear or non-linear joint estimation techniques may be employed such as maximum likelihood (ML), maximum a priori (MAP), non-linear least squares (NNLS), clustering techniques, support vector machines, decision trees and forests, and the like.

As illustrated and described above, the processor 54 is configured to analyze the signals generated by at least one light sensing device 38 relative to time. In another embodiment, the detection algorithm may be configured to apply one or more of a Fourier transform, Wavelet transform, space-time transform, Choi-Williams distribution, Wigner-Ville distribution and the like, to the signals to convert the signals from a temporal domain to a frequency domain. This transformation may be applied to the signals when the nodes 34 are being analyzed individually, when the nodes 34 are being analyzed collectively during a data fusion, or both.

The relationship between the light scattering and the magnitude or presence of a condition is inferred by measuring a signal's causality and dependency. As an example, the measure of a causality utilizes one or more signal features as an input and determines one or more outputs from a calculation of a hypothesis testing method, foreground ratio, second derivative, mean or Granger Causality Test. Similarly, one or more signal features may be used as an input to evaluate the dependency of a signal. One or more outputs are selected from a calculation of a correlation, fast Fourier transform coefficients, a second derivative, or a window. The magnitude and presence of the condition is then based on the causality and dependency. The magnitude and presence of a condition may be calculated utilizing one or more evaluation approaches: a threshold, velocity, rate of change or a classifier. The detection algorithm may include utilizing the output from the calculation causality, dependency or both. This is used to indicate the presence of the condition at one or more nodes 34 and initiate a response.

Because the frequency of smoke varies within a small range, such as from about 0.01 Hz to about 10 Hz for example, evaluation of the signals with respect to frequency may effectively and accurately determine the presence of smoke within the predetermined space 82. The detection algorithm may be configured to evaluate the signals in a fixed time window to determine the magnitude of the frequency or the strength of the motion of the smoke. Accordingly, if the magnitude of a frequency component exceeds a predetermined threshold, the detection algorithm may initiate an alarm indicating the presence of a fire. In an embodiment, the predetermined threshold is about 10 Hz such that when the magnitude of the optical smoke frequency exceeds the threshold, smoke is present.

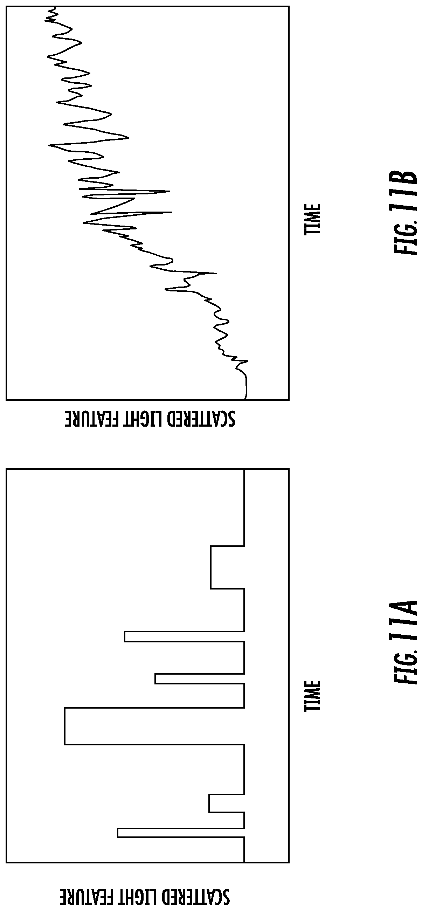

In an embodiment, the algorithm 58 is configured to distinguish between different events or conditions based on the rate of change in the light scattered by the atmosphere near the node 34 and received by one or more of the nodes 34 over time. With reference to FIGS. 11A and 11B, graphs of the signals recorded from a node 34 over time with respect to different events are illustrated. FIG. 11A indicates the change in the light signal received by a node 34 as a person walks through the area being monitored by the node 34. As shown in the graph, the movement of a person appears as steps having varying magnitudes. FIG. 11B, which represents the detection of smoke from a smoldering fire, appears graphically as a much continuously changing signal having an accelerating increase in the change in light signal received by a node 34 over time. It should be understood that the graphs illustrated are examples only. Further, each predefined event detectable by the detection system 20 may have one or more unique parameters associated therewith.

To reduce the noise associated with each signal, the light emitting device 36 may be modulated such that the device 36 is selectively operated to generate modulated light in a specific pattern. In an embodiment, the light within the pattern may vary in intensity, width, frequency, phase, and may comprise discrete pulses or may be continuous. The specific pattern of light may be designed to have desirable properties such as a specific autocorrelation with itself or cross-correlation with a second specific pattern. When the light is emitted in a specific pattern, the light scattered back to a corresponding light sensing device 38 should arrive in the substantially same pattern. Use of one or more specific and known patterns provides enhanced processing capabilities by allowing for the system 20 to reduce overall noise. This reduction in noise when combined with the signal processing may result in an improved signal to noise ratio and the total number of false events or conditions detected will decrease. Alternatively, or in addition, the device sensitivity may be improved thereby increasing the limits of the detection system 20. Similarly, by cross-correlating one or more second patterns, specific causes of transmitted or reflected signals may be distinguished, e.g. by Bayesian estimation of the respective cross-correlations of the received signal with the one or more second patterns.

In addition, modulation of the light signal emitted by the light source 36 may provide improved detection by determining more information about the event or condition causing the scatter in the light signal received by the node 34. For example, such modulation may allow the system 20 to more easily distinguish between a person walking through the designated area adjacent a node, as shown in FIG. 11A, and a smoldering fire adjacent the node 34.

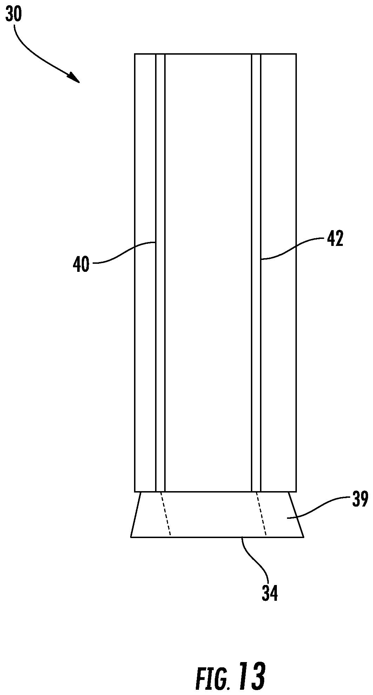

With reference now to FIGS. 12 and 13, the detection system 20 may be used to distinguish smoke from other types of predetermined conditions or nuisances. In an embodiment, each node 34 includes an emitting core 40 for transmitting light to the ambient area outside the fiber harness 30 adjacent the node 34, and a plurality of receiving cores 42, 44 for collecting/receiving scattered light from the designated area being monitored by the node 34. As shown in FIG 12, each receiving core 42, 44 is operably connected to a different light sensitive device 38 in order to differentiate between the scattered light received by the different cores. Alternatively, the receiving cores 42, 44 are different lengths and can be operably connected to the same light sensitive device and the scattered light received by each of the light sensitive devices 38 can be differentiated based on the time of flight of the scattered light.

Although the cross section of a fiber optic cable 28 in FIG. 12 is illustrated as having a second core 42 and a third core 44 for transmitting scattered light back to a light sensitive device 38, embodiments having three or more cores for receiving the scattered light are also contemplated herein. In addition, embodiments where there is a plurality of emitting cores are contemplated herein. Embodiments where the emitting cores also receives scattered light are also contemplated herein.

Each of the plurality of cores 42, 44 configured to receive scattered light back to a light sensitive device 38 is oriented at a different angle relative to the emitting core 40. For example, a first angle is formed between the emitting core 40 and the first receiving core 42, and a second angle is formed between the emitting core 40 and the second receiving core 44. The first angle and the second angle are known and are distinct. In an embodiment, the different angles can be achieved by physically orienting/positioning the cores differently. In another embodiment, the different angles can be achieved by using a plurality of nodes 34, wherein not all of the nodes include an emitting core 40. In another embodiment, as shown in FIG 13, a light mold 39 can be used to receive scattered light from different scattering angles at the plurality of receiving cores 42, 44. The light mold 39 is operably connected to a node 34 and is configured to support the emitting core 40 and the plurality of receiving cores 42, 44 such that the plurality of cores 40, 42, 44 at the node 34 each receive scattered light from a desired angle.

In such embodiments, the algorithm 58 executed by the processor 54 is configured to provide the two signals associated with each node 34 into an algorithm. Together, the processor 54 is configured to use the known angles and the algorithm to distinguish between various types of conditions, such as gas, dust, water vapor, solid objects and smoke.

## Claims

1. A detection system for measuring one or more conditions within a predetermined area comprising:
a fiber harness (30) having a fiber optic cable (28) for transmitting light, the fiber optic cable (28) defining a plurality of nodes (34) arranged to measure the condition, wherein each node (34) is arranged such that light scattered by an atmosphere adjacent the node is received by a corresponding separate core (40) of the fiber optic cable (28) at least one scattering angle relative to light transmitted through the node; and
a control system (50) operably coupled to the fiber harness (30) such that scattered light associated with each node (34) is transmitted to the control system (50), wherein the control system (50) analyzes the scattered light to determine at least one of a presence and magnitude of the one or more conditions at each node.

2. The system according to claim 1, further comprising a light sensitive device (38), wherein the light sensitive device is operably coupled to a control unit (52) and the cores.

3. The system according to claim 2, wherein the light sensitive device converts the scattered light associated with each node into a signal receivable by the control unit.

4. The system according to claim 1, 2 or 3, further comprising a light source (36) for transmitting light to each node.

5. The system according to any preceding claim, further comprising a light mold (39) positioned adjacent to each node, the cores being operably coupled to the light mold to optically maintain an orientation of the transmitted light relative to the scattered light.

6. The system according to claim 5, further comprising the light mold positioned adjacent to the node to selectively receive scattered light from one or more scattering angles indicative of the presence of one or more conditions.

7. The system according to any preceding claim, wherein each of the cores further comprises a plurality of cores associated with a node for transmitting and receiving light.

8. The system according to any preceding claim, wherein the predetermined area is a portion of an aircraft.

9. The system according to any preceding claim, wherein the condition is the presence of smoke in the predetermined area.

10. The system according to any preceding claim, wherein each of the nodes (34) further comprises a first fiber optic core and a second fiber optic core (44), wherein the first fiber optic core receives the scattered light at a first scattering angle relative to the light transmitted through the node and the second fiber optic core receives the scattered light at a second scattering angle relative to the light transmitted through the node, the first scattering angle being different than the second scattering angle.

11. A method of measuring one or more conditions within a predetermined area comprising:
transmitting light along a fiber harness (30) and through a plurality of nodes (34) of a fiber optic cable (28) of the fiber harness (30), the plurality of nodes (34) arranged to measure the one or more conditions;
for each node (34) receiving by a corresponding separate core (40) of the fiber optic cable light scattered by an atmosphere adjacent the node (34), the scattered light being received at at least one scattering angle relative to light transmitted through the node (34);
communicating a signal corresponding to the scattered light associated with each node (34) to a control unit (52); and
analyzing the signal to determine at least one of the presence and magnitude of the one or more conditions at each node (34) within the predetermined area.

12. The method according to claim 11, wherein the scattered light is received via the cores (40) arranged at the at least one scattering angle.

13. The method according to claim 11 or 12, wherein determining at least one of the presence and magnitude of the one or more conditions includes evaluating the signal using cross correlation of the signals associated with a plurality of scattering angles.

14. The method according to claim 11, 12 or 13, wherein determining at least one of the presence and magnitude of the one or more conditions includes evaluating the signal using a ratio of the signals associated with a plurality of scattering angles.

15. The method according to any one of claims 11-14, wherein at least one light sensitive device operably coupled to the control unit is configured to convert the scattered light associated with the at least one node into an electrical signal before communicating the signal to the control unit.

## Patentansprüche

1. Detektionssystem zum Messen eines oder mehrerer Zustände innerhalb eines vorbestimmten Bereichs, umfassend:
einen Faserbaum (30), der ein Faseroptikkabel (28) zum Übertragen von Licht aufweist, wobei das Faseroptikkabel (28) eine Vielzahl von Knoten (34) definiert, die angeordnet ist, um den Zustand zu messen, wobei jeder Knoten (34) derart angeordnet ist, dass durch eine Atmosphäre benachbart zu dem Knoten gestreutes Licht durch einen entsprechenden separaten Kern (40) des Faseroptikkabels (28) in zumindest einem Streuwinkel relativ zu durch den Knoten übertragenem Licht empfangen wird; und
ein Steuersystem (50), das mit dem Faserbaum (30) wirkgekoppelt ist, sodass gestreutes Licht in Verbindung mit jedem Knoten (34) an das Steuersystem (50) übertragen wird,
wobei das Steuersystem (50) das gestreute Licht analysiert, um zumindest eines von einem Vorhandensein und einer Größe des einen oder der mehreren Zustände an jedem Knoten zu bestimmen.

2. System nach Anspruch 1, ferner umfassend eine lichtempfindliche Vorrichtung (38), wobei die lichtempfindliche Vorrichtung mit einer Steuereinheit (52) und den Kernen wirkgekoppelt ist.

3. System nach Anspruch 2, wobei die lichtempfindliche Vorrichtung das gestreute Licht in Verbindung mit jedem Knoten in ein Signal umwandelt, das durch die Steuereinheit empfangbar ist.

4. System nach Anspruch 1, 2 oder 3, ferner umfassend eine Lichtquelle (36) zum Übertragen von Licht an jeden Knoten.

5. System nach einem vorhergehenden Anspruch, ferner umfassend eine Lichtform (39), die benachbart zu jedem Knoten positioniert ist, wobei die Kerne mit der Lichtform wirkgekoppelt sind, um eine Ausrichtung des übertragenen Lichtes relativ zu dem gestreuten Licht optisch beizubehalten.

6. System nach Anspruch 5, ferner umfassend die Lichtform, die benachbart zu dem Knoten positioniert ist, um selektiv gestreutes Licht von einem oder mehreren Streuwinkeln zu empfangen, die das Vorhandensein von einem oder mehreren Zuständen angeben.

7. System nach einem vorhergehenden Anspruch, wobei jeder der Kerne ferner eine Vielzahl von Kernen in Verbindung mit einem Knoten zum Übertragen und Empfangen von Licht umfasst.

8. System nach einem vorhergehenden Anspruch, wobei der vorbestimmte Bereich ein Abschnitt eines Luftfahrzeugs ist.

9. System nach einem vorhergehenden Anspruch, wobei der Zustand das Vorhandensein von Rauch in dem vorbestimmten Bereich ist.

10. System nach einem vorhergehenden Anspruch, wobei jeder der Knoten (34) ferner einen ersten Faseroptikkern und einen zweiten Faseroptikkern (44) umfasst, wobei der erste Faseroptikkern das gestreute Licht in einem ersten Streuwinkel relativ zu dem durch den Knoten übertragenen Licht empfängt und der zweite Faseroptikkern das gestreute Licht in einem zweiten Streuwinkel relativ zu dem durch den Knoten übertragenen Licht empfängt, wobei sich der erste Streuwinkel von dem zweiten Streuwinkel unterscheidet.

11. Verfahren zum Messen von einem oder mehreren Zuständen innerhalb eines vorbestimmten Bereichs, umfassend:
Übertragen von Licht entlang eines Faserbaums (30) und durch eine Vielzahl von Knoten (34) eines Faseroptikkabels (28) des Faserbaums (30), wobei die Vielzahl von Knoten (34) angeordnet ist, um den einen oder die mehreren Zustände zu messen;
für jeden Knoten (34) Empfangen von Licht, das durch eine Atmosphäre benachbart zu dem Knoten (34) gestreut wird, durch einen entsprechenden separaten Kern (40) des Faseroptikkabels,
wobei das gestreute Licht in zumindest einem Streuwinkel relativ zu durch den Knoten (34) übertragenem Licht empfangen wird;
Kommunizieren eines Signals entsprechend dem gestreuten Licht in Verbindung mit jedem Knoten (34) an eine Steuereinheit (52); und
Analysieren des Signals, um zumindest eines von dem Vorhandensein und der Größe des einen oder der mehreren Zustände an jedem Knoten (34) innerhalb des vorbestimmten Bereichs zu bestimmen.

12. Verfahren nach Anspruch 11, wobei das gestreute Licht über die Kerne (40) empfangen wird, die in dem zumindest einen Streuwinkel angeordnet sind.

13. Verfahren nach Anspruch 11 oder 12, wobei das Bestimmen von zumindest einem von dem Vorhandensein und der Größe des einen oder der mehreren Zustände das Evaluieren des Signals unter Anwendung von Kreuzkorrelation der Signale in Verbindung mit einer Vielzahl von Streuwinkeln beinhaltet.

14. Verfahren nach Anspruch 11, 12 oder 13, wobei das Bestimmen von zumindest einem von dem Vorhandensein und der Größe des einen oder der mehreren Zustände das Evaluieren des Signals unter Verwendung eines Verhältnisses der Signale in Verbindung mit einer Vielzahl von Streuwinkeln beinhaltet.

15. Verfahren nach einem der Ansprüche 11-14, wobei zumindest eine lichtempfindliche Vorrichtung, die mit der Steuereinheit wirkgekoppelt ist, konfiguriert ist, um das gestreute Licht in Verbindung mit dem zumindest einen Knoten in ein elektrisches Signal umzuwandeln, bevor das Signal an die Steuereinheit kommuniziert wird.

## Revendications

1. Système de détection pour mesurer une ou plusieurs conditions à l'intérieur d'une zone prédéterminée comprenant :
un faisceau de fibres (30) ayant un câble de fibre optique (28) pour la transmission de lumière, le câble de fibre optique (28) définissant une pluralité de noeuds (34) agencés pour mesurer la condition, dans lequel chaque noeud (34) est agencé de sorte que la lumière diffusée par une atmosphère de manière adjacente au noeud est reçue par un noyau séparé (40) correspondant du câble de fibre optique (28) à au moins un angle de diffusion par rapport à la lumière transmise par le noeud ; et
un système de commande (50) couplé fonctionnellement au faisceau de fibres (30) de sorte que la lumière diffusée associée à chaque noeud (34) est transmise au système de commande (50), dans lequel le système de commande (50) analyse la lumière diffusée pour déterminer au moins un parmi une présence et amplitude des une ou plusieurs conditions à chaque noeud.

2. Système selon la revendication 1, comprenant en outre un dispositif sensible à la lumière (38), dans lequel le dispositif sensible à la lumière est couplé fonctionnellement à une unité de commande (52) et aux noyaux.

3. Système selon la revendication 2, dans lequel le dispositif sensible à la lumière convertit la lumière diffusée associée à chaque noeud en un signal pouvant être reçu par l'unité de commande.

4. Système selon la revendication 1, 2 ou 3, comprenant en outre une source de lumière (36) pour la transmission de lumière à chaque noeud.

5. Système selon une quelconque revendication précédente, comprenant en outre un moule de lumière (39) positionné de manière adjacente à chaque noeud, les noyaux étant couplés fonctionnellement au moule de lumière pour maintenir optiquement une orientation de la lumière transmise par rapport à la lumière diffusée.

6. Système selon la revendication 5, comprenant en outre le moule de lumière positionné de manière adjacente au noeud pour recevoir sélectivement la lumière diffusée d'un ou plusieurs angles de diffusion indiquant la présence d'une ou plusieurs conditions.

7. Système selon une quelconque revendication précédente, dans lequel chacun des noyaux comprend en outre une pluralité de noyaux associés à un noeud pour la transmission et la réception de lumière.

8. Système selon une quelconque revendication précédente, dans lequel la zone prédéterminée est une portion d'un aéronef.

9. Système selon une quelconque revendication précédente, dans lequel la condition est la présence de fumée dans la zone prédéterminée.

10. Système selon une quelconque revendication précédente, dans lequel chacun des noeuds (34) comprend en outre un premier noyau de fibre optique et un deuxième noyau de fibre optique (44), dans lequel le premier noyau de fibre optique reçoit la lumière diffusée à un premier angle de diffusion par rapport à la lumière transmise par le noeud et le deuxième noyau de fibre optique reçoit la lumière diffusée à un deuxième angle de diffusion par rapport à la lumière transmise par le noeud, le premier angle de diffusion étant différent du deuxième angle de diffusion.

11. Procédé de mesure d'une ou plusieurs conditions à l'intérieur d'une zone prédéterminée comprenant :
la transmission de lumière le long d'un faisceau de fibres (30) et par une pluralité de noeuds (34) d'un câble de fibre optique (28) du faisceau de fibres (30), la pluralité de nouds (34) étant agencée pour mesurer les une ou plusieurs conditions ;
pour chaque noeud (34), la réception par un noyau séparé (40) correspondant du câble de fibre optique de la lumière diffusée par une atmosphère de manière adjacente au noeud (34), la lumière diffusée étant reçue à au moins un angle de diffusion par rapport à la lumière transmise par le noeud (34) ;
la communication d'un signal correspondant à la lumière diffusée associée à chaque noeud (34) à une unité de commande(52) ; et
l'analyse du signal pour déterminer au moins un parmi la présence et l'amplitude des une ou plusieurs conditions à chaque noeud (34) à l'intérieur de la zone prédéterminée.

12. Procédé selon la revendication 11, dans lequel la lumière diffusée est reçue via les noyaux (40) agencés à l'au moins un angle de diffusion.

13. Procédé selon la revendication 11 ou 12, dans lequel la détermination d'au moins un parmi la présence et l'amplitude des une ou plusieurs conditions inclut l'évaluation du signal en utilisant une corrélation croisée des signaux associés à une pluralité d'angles de diffusion.

14. Procédé selon la revendication 11, 12 ou 13, dans lequel la détermination d'au moins un parmi la présence et l'amplitude des une ou plusieurs conditions inclut l'évaluation du signal en utilisant un ratio des signaux associés à une pluralité d'angles de diffusion.

15. Procédé selon l'une quelconque des revendications 11-14, dans lequel au moins un dispositif sensible à la lumière couplé fonctionnellement à l'unité de commande est configuré pour convertir la lumière diffusée associée à l'au moins un noeud en un signal électrique avant communication du signal à l'unité de commande.
